(19) Europäisches Patentamt
European Patent Office
Office européen des brevets

(11) EP 0 496 056 B1

(12) **EUROPEAN PATENT SPECIFICATION**

(45) Date of publication and mention of the grant of the patent:
**12.03.1997 Bulletin 1997/11**

(51) Int Cl.[6]: **C08L 83/04**

(21) Application number: **91120260.4**

(22) Date of filing: **27.11.1991**

(54) **Thermosetting organopolysiloxane composition**

Hitzehärtbare Organopolysiloxanzusammensetzung

Composition d'organopolysiloxane thermodurcissable

(84) Designated Contracting States:
**BE DE FR GB**

(30) Priority: **28.11.1990 JP 327260/90**

(43) Date of publication of application:
**29.07.1992 Bulletin 1992/31**

(73) Proprietor: **Dow Corning Toray Silicone Company, Limited**
**Tokyo 103 (JP)**

(72) Inventors:
- **Hasegawa, Chi-Ichiro**
  **Sakai-gun, Fukui Prefecture (JP)**
- **Hirono, Kenji**
  **Fukui-shi, Fukui Prefecture (JP)**
- **Yoshikawa, Tomoji**
  **Fukui-shi, Fukui Prefecture (JP)**
- **Hamada, Mitsuo**
  **Kisarazu-shi, Chiba Prefecture (JP)**

(74) Representative: **Spott, Gottfried, Dr.**
**Spott, Weinmiller & Partner**
**Sendlinger-Tor-Platz 11**
**80336 München (DE)**

(56) References cited:
**EP-A- 0 062 427**
**EP-A- 0 238 873**
**EP-A- 0 345 965**
**FR-A- 2 300 114**

- **WORLD PATENTS INDEX Derwent Publications Ltd., London, GB; AN 80-37636C**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a thermosetting organopolysiloxane composition which can be cured by heating to give a highly durable, strongly fatigue-resistant silicone rubber.

Silicone rubbers exhibit rubbery elastic properties over a broad temperature range and therefore find widespread application in keyboards, valve gaskets and packings, isokinetic joint boots, wire and cable coatings, and so forth. However, the mechanical properties of silicone rubbers are generally inferior to those of other organic rubbers, and a particular problem with the former in this regard is their ready fatigue under the repeated application of external stress.

Silicone rubber compositions which provide improvement on this point have already been proposed, for example, silicone rubber compositions whose principal component is a mixture of low-vinyl organopolysiloxane plus high-vinyl organopolysiloxane, and silicone rubber compositions whose principal component is a mixture of low-vinyl organopolysiloxane plus high-vinyl organopolysiloxane plus organohydrogenpolysiloxane.

With respect to mechanical properties, the aforesaid compositions do in fact give silicone rubbers with an improved tear strength, but they are not entirely satisfactory in terms of producing a highly durable, strongly fatigue-resistant silicone rubber.

When a thermosetting organopolysiloxane composition is produced using microparticulate silica having a specific surface area of at least 250 $m^2/g$ and bearing no more than 0.50 weight percent water as the filler in conjuction with a vinyl group-containing organopolysiloxane, a vinyl group-containing hydroxyl endblocked organopolysiloxane and a curing agent, the cured composition has unusually high fatigue resistance.

EP-A 0 238 873 discloses a heat-vulcanizing organopolysiloxane composition which must contain two different polysiloxane gums, an organohydrogenpolysiloxane, a silica powder having a specific surface area of at least 250 $m^2/g$, an organic peroxide and a hydroxyl group containing organopolysiloxane. The water content of the silica powder is not mentioned in this document.

In other words, the present invention takes as its object the introduction of an organopolysiloxane composition which thermosets into a highly durable, strongly fatigue-resistant silicone rubber.

The aforesaid object is accomplished by a thermosetting organopolysiloxane composition which comprises (A) 100 weight parts vinyl group-containing organopolysiloxane gum with the following general formula

$$R^1_3SiO(\overset{R^2_2}{\overset{|}{Si}}O)_mSiR^1_3$$

wherein $R^1$ is the hydroxyl group or a substituted or unsubstituted monovalent hydrocarbon group, $R^2$ is a substituted or unsubstituted monovalent hydrocarbon group wherein the vinyl group comprises 0.1 to 2.0 mole percent of the $R^2$ groups, and m is a number with a value of at least 3,000, (B) 10 to 100 weight parts microparticulate silica having a specific surface area of at least 250 $m^2/g$ and bearing no more than 0.50 weight percent adsorbed water, (C) 1 to 50 weight parts hydroxyl group-containing organopolysiloxane which has the following general formula

$$(CH_3)_2R^3SiO(\overset{R^4_2}{\overset{|}{Si}}O)_pSiR^3(CH_3)_2$$

wherein $R^3$ is the hydroxyl group; $R^4$ is a monovalent hydrocarbon group, of which zero to 75 mole percent is the vinyl group; and p is a number with a value of 1 to 100, and (D) a curing agent in a quantity sufficient to cure the composition of the present invention.

The vinyl-containing organopolysiloxane comprising the component (A) employed by the present invention is an organopolysiloxane gum which carries pendant or side-chain vinyl groups. The groups $R^1$ in the preceding formula encompass the hydroxyl group as well as substituted and unsubstituted monovalent hydrocarbon groups as exemplified by alkyl groups such as methyl, ethyl, and propyl; cycloalkyl groups such as cyclohexyl; aralkyl groups such as beta-phenylethyl; aryl groups such as phenyl; alkenyl groups such as vinyl and allyl; and the preceding groups in which hydrogen has been replaced by, for example, the cyano group. The group $R^2$ in the preceding formula encompasses the same substituted and unsubstituted monovalent hydrocarbon groups as for $R^1$ above with the proviso that in this case 0.1 to 2.0 mole percent of these groups must be the vinyl group. When less than 0.1 mole percent vinyl group is

present, the crosslink density in the silicone rubber taken as a whole will be too low, and the mechanical strength will be reduced as a consequence. When more than 2.0 mole percent vinyl group is present, the crosslink density becomes too high, and the mechanical properties (particularly the hardness, compression set, and heat resistance) are again degraded.

The microparticulate silica comprising the component (B) employed by the present invention is indispensable both for improving the fatigue resistance of the composition according to the present invention as well as for equipping the silicone rubber with mechanical properties in the role of a reinforcing agent.

The silica micropowder under consideration must contain no more than 0.50 weight percent adsorbed water and must have a specific surface area of at least 250 $m^2/g$.

The fatigue resistance of the silicone rubber suffers from a precipitous decline when this silica contains more than 0.50 weight percent adsorbed water. While it is specified that the present invention employ silica micropowder which contains no more than 0.5 weight percent adsorbed water, material containing 0.1 to 0.5 weight percent absorbed water is typically employed. This type of silica micropowder can be prepared by adjusting the moisture fraction in the silica micropowders already familiar in the art for use as reinforcing agents for silicone rubbers. The silica micropowders are exemplified by the fumed silica and calcined silica produced by dry methods and by the precipitated silica produced by wet methods. Silica micropowder manufactured by dry methods is preferred by the present invention because it gives a silicone rubber with an even better fatigue resistance. Silica micropowders adsorb moisture from the air upon storage. It is not uncommon for 1 weight percent and higher of moisture to be adsorbed, particularly under conditions of high humidity. This component should be added in the range of 10 to 100 weight parts, preferably 20 to 50 weight parts, and more preferably 30 to 40 weight parts, in each case per 100 weight parts component (A). This range is specified based on a rather peculiar observation: the fatigue resistance is diminished at less than 10 weight parts, but also declines precipitously at more than 100 weight parts.

The hydroxyl-containing organopolysiloxane comprising the component (C) used by the present invention functions to increase or improve the affinity between the organopolysiloxane gum comprising component (A) and the microparticulate silica comprising component (B). With regard to the preceding formula for this hydroxyl-containing organopolysiloxane, the groups $R^3$ are to be the hydroxyl group, while the groups $R^4$ comprise monovalent hydrocarbon groups as exemplified by alkyl groups such as methyl, ethyl, and propyl; aryl groups such as phenyl; and alkenyl groups such as vinyl and allyl. The crosslink density becomes too high when vinyl exceeds 75 percent, and both the tensile strength and elongation will suffer from reduced values as a result.

The curing agent comprising the component (D) employed by the present invention is simply any curing agent which can cure the components (A) through (C) described above, and those curing agents already known for application with silicone rubber compositions can be used. No specific restrictions are placed on the type. This curing agent includes the organoperoxides, for which examples are benzoyl peroxide, 2,4-dichlorobenzoyl peroxide, di-tert-butyl peroxide, tert-butylmonochlorobenzoyl peroxide, and 2,5-dimethyl-2,5-di(tert-butylperoxy)hexane. The curing agent under consideration also includes the combination of a platinum-type catalyst with organohydrogenpolysiloxane having at least 2 silicon-bonded hydrogen atoms in each molecule.

This organohydrogenpolysiloxane is exemplified by trimethylsiloxy-terminated dimethylsiloxane-methylhydrogensiloxane copolymers, while the platinum-type catalyst is exemplified by chloroplatinic acid, chloroplatinic acid/alkenyl compound complexes, and chloroplatinic acid/divinyltetramethyldisiloxane complexes.

The composition according to the present invention is readily prepared by simply mixing the aforementioned components (A) through (D) to homogeneity. In addition to these components (A) through (D), the composition according to the present invention may optionally contain those additives already known for use in silicone rubber compositions insofar as those properties which are the object of the present invention are not adversely affected. These additives are exemplified by iron oxide red, cerium oxide, the fatty acid salts of cerium, titanium oxide, and carbon black.

The present invention's thermosetting organopolysiloxane composition prepared as described hereinbefore characteristically thermosets into a highly fatigue-resistant silicone rubber. As a consequence of this property, this silicone rubber composition is strongly qualified for application in products which are subjected to repeated deformation, such as keyboards, bellows boots, and valve packings and gaskets.

The present invention is explained in greater detail below through illustrative examples, in which all parts are parts by weight, the viscosity is the value measured at 25 degrees Centigrade and cs equals centistokes. In the examples, the quantity of adsorbed water in the silica micropowder, the fatigue at constant elongation, and the flexural fatigue were measured by the following methods.

Measurement of the water of adsorption in the silica micropowder was as follows:

A weighing bottle was dried in a desiccator over silica gel, and the dried weighing bottle was then weighed (measurement value a). The silica micropowder was introduced into the dried weighing bottle, which was then closed with its lid and weighed (measurement value b). This weighing bottle (containing the silica micropowder) was subsequently placed in a natural convection oven held at 105 degrees Centigrade and dried for 2 hours with the lid of the weighing bottle half open. The lid on the bottle was then closed, the bottle was cooled, and the silica micropowder-containing

weighing bottle was weighed (measurement value c). The quantity of water of absorption was calculated from the preceding measurement values using the following equation.

$$\text{quantity of adsorbed water in the silica micropowder} = [(b - c)/(b - a)] \times 100$$

Constant elongation fatigue testing was measured as follows: The test specimen was prepared by punching out a number 3 dumbbell from the 2-mm thick silicone rubber sheet and was set into a De Mattia tester as described in Section 15 of JIS K 6301. It was then subjected to reciprocating motion at 300 + or - 10 cycles/minute with a maximum clamp distance of 75 mm and a minimum clamp distance of 37 mm. The number of reciprocating cycles until test specimen failure was designated as the fatigue life at constant elongation. In this test procedure, the test specimen installed in the clamps was repetitively stretched over an elongation of zero to 100 percent.

Flexural fatigue testing was measured as follows: The number of cycles to failure was measured in accordance with Section 15 of JIS K 6301.

Example 1

The following were introduced into a kneader mixer: 100 weight parts dimethylvinylsiloxy-terminated dimethylsiloxane-methylvinylsiloxane copolymer gum with an average degree of polymerization (DP) of 7,000 (99.5 mole percent $(CH_3)_2SiO$ unit and 0.5 mole percent $(CH_3)(CH_2{=}CH)SiO$ unit) and 10 weight parts hydroxyl-terminated methylvinylpolysiloxane with an average DP of 5. This was followed by the introduction with mixing to homogeneity of 33 weight parts of a fumed silica having a specific surface area of 300 $m^2/g$ and carrying 0.28 weight percent water of adsorption. A thermosetting organopolysiloxane composition was prepared by heating at 150 degrees Centigrade for 2 hours in order to remove the volatiles.

To this composition were added 3 weight parts trimethylsiloxy-terminated methylhydrogenpolysiloxane (viscosity of 10 $mm^2/s$ (cs)) and 0.5 weight parts 2,5-dimethyl-2,5-di(tert-butylperoxy)hexane followed by mixing to homogeneity on a two-roll mill. The resulting composition was compression molded for 10 minutes at 170 degrees Centigrade/30 kg/cm2 to give a 2 mm-thick sheet, and this sheet was used for measurement of the physical properties in accordance with JIS K 6301 and for measurement of the fatigue at constant elongation.

For comparison, organopolysiloxane compositions were prepared as above, but respectively replacing the aforementioned silica (specific surface area about 300 $m^2/g$, adsorbed water of 0.28 weight percent) with a fumed silica having a specific surface area of 300 $m^2/g$ and carrying 0.62 weight percent or 0.88 weight percent adsorbed water and with a fumed silica having a specific surface area of 200 $m^2/g$ and carrying 0.35 weight percent adsorbed water. The physical properties and fatigue at constant elongation of the silicone rubber sheets prepared from these compositions were measured as described above, and the measurement results thus obtained are reported in Table 1 as Comparison Examples 1 to 3.

Table 1

| | Present Invention | Comparison Examples | | |
|---|---|---|---|---|
| | | Comparison Example 1 | Comparison Example 2 | Comparison Example 3 |
| specific surface area of the fumed silica ($m^2/g$) | 300 | 300 | 300 | 200 |
| quantity of adsorbed water in the fumed silica (%) | 0.28 | 0.62 | 0.88 | 0.35 |
| hardness (JIS A) | 61 | 61 | 61 | 61 |
| tensile strength ($kgf/cm^2$) | 89 | 92 | 90 | 85 |
| elongation (%) | 360 | 370 | 330 | 280 |
| tear strength (kgf/cm) | 36 | 33 | 32 | 29 |
| 100% modulus ($kgf/cm^2$) | 34 | 33 | 36 | 31 |
| life at constant elongation cycles x $10^4$) | 413 | 286 | 205 | 202 |

Example 2

The following were introduced into a kneader mixer: 100 weight parts dimethylvinylsiloxy-terminated dimethylsiloxane-methylvinylsiloxane copolymer gum with an average DP of 7,000 (99.0 mole percent $(CH_3)_2SiO$ unit and 1.0 mole percent $(CH_3)(CH_2{=}CH)SiO$ unit) and 9 weight parts hydroxyl-terminated methylvinylpolysiloxane with an average DP of 5.

This was followed by the introduction with mixing to homogeneity of 30 weight parts of a fumed silica having a specific surface area of 300 $m^2/g$ and carrying 0.28 weight percent water of adsorption. A thermosetting organopolysiloxane composition was prepared by heating at 150 degrees Centigrade for 2 hours in order to remove the volatiles.

To this composition was added 0.5 weight parts 2,5-dimethyl-2,5-di(tert-butylperoxy)hexane followed by mixing to

homogeneity on a two-roll mill. The resulting composition was compression molded for 10 minutes at 170 degrees Centigrade/30 kg/$cm^2$ to give a 2 mm-thick sheet, and this sheet was subjected to a secondary vulcanization by heating for another 4 hours at 200 degrees Centigrade in an oven. The resulting sheet was used for measurement of the physical properties in accordance with JIS K 6301, for flexural fatigue testing, and for measurement of the fatigue at constant elongation.

For comparison, an organopolysiloxane composition (Comparison Example 4 composition) was prepared as above, but in this case replacing the aforementioned fumed silica (specific surface area of 300 $m^2$/g, adsorbed water of 0.28 weight percent) with a fumed silica having a specific surface area of 300 $m^2$/g and carrying 0.88 weight percent adsorbed water. The physical properties, life at constant elongation, and flexural fatigue of the silicone rubber sheet prepared from this composition were measured as described above, and the measurement results thus obtained are reported in Table 2 as Comparison Example 4.

Table 2

| | Present Invention | Comparison Example 4 |
|---|---|---|
| quantity of adsorbed water in the fumed silica (%) | 0.28 | 0.88 |
| hardness (JIS A) | 50 | 51 |
| tensile strength (kgf/cm2) | 101 | 102 |
| elongation (%) | 480 | 490 |
| 100% modulus (kgf/cm2) | 12 | 13 |
| life at constant elongation (cycles x 104) | 251 | 131 |
| flexural fatigue test (cycles x 104) | 360 | 280 |

Example 3

An organopolysiloxane composition was prepared by adding the following to the thermosetting organopolysiloxane composition prepared in Example 2: 1 weight part trimethylsiloxy-terminated methylhydrogenpolysiloxane (viscosity of 20 $mm^2$/s (cs)), sufficient chloroplatinic acid/divinyltetramethyldisiloxane complex to give a 10 ppm platinum concentration, and 0.05 weight parts phenylbutynol as reaction inhibitor.

This composition was compression molded for 10 minutes at 150 degrees Centigrade/30 kg/$cm^2$ to afford a 2 mm-thick sheet, and this sheet was heated for an additional 4 hours at 200 degrees Centigrade in an oven. This sheet was subjected to measurement of its physical properties in accordance with JIS K 6301 and to measurement of its constant elongation life, and the obtained results are reported in Table 3.

For comparison, an organopolysiloxane composition was prepared as above, but in this case using the thermosetting organopolysiloxane composition as prepared for Comparison Example 4 (see Example 2) in place of the thermosetting organopolysiloxane composition as prepared for Example 2. A silicone rubber sheet was prepared from the resulting composition by the same method as above and was subjected to physical property measurement and measurement of the constant elongation life. These results are reported in Table 3 as Comparison Example 5.

Table 3

| | Present Invention | Comparison Example 5 |
|---|---|---|
| quantity of adsorbed water in the fumed silica (%) | 0.28 | 0.88 |
| hardness (JIS A) | 41 | 41 |
| tensile strength (kgf/$cm^2$) | 97 | 100 |
| elongation (%) | 860 | 940 |
| 100% modulus (kgf/$cm^2$) | 9 | 9 |
| life at constant elongation (cycles x $10^4$) | 730 | 490 |

## Claims

**1.** Thermosetting organopolysiloxane composition which comprises

(A) 100 weight parts vinyl group-containing organopolysiloxane gum with the following general formula

$$R^1_3SiO(\overset{R^2_2}{\overset{|}{Si}}O)_mSiR^1_3$$

wherein $R^1$ is the hydroxyl group or a substituted or unsubstituted monovalent hydrocarbon group, $R^2$ is a substituted or unsubstituted monovalent hydrocarbon group wherein the vinyl group comprises 0.1 to 2.0 mole percent of the $R^2$ groups, and m is a number with a value of at least 3,000,
(B) 10 to 100 weight parts microparticulate silica having a specific surface area of at least 250 $m^2/g$ and bearing no more than 0.50 weight percent adsorbed water,
(C) 1 to 50 weight parts hydroxyl group-containing organopolysiloxane which has the following general formula

$$(CH_3)_2R^3SiO(\overset{R^4_2}{\overset{|}{Si}}O)_pSiR^3(CH_3)_2$$

wherein $R^3$ is the hydroxyl group; $R^4$ is a monovalent hydrocarbon group, of which zero to 75 mole percent is the vinyl group; and p is a number with a value of 1 to 100,

and
(D) a curing agent in a quantity sufficient to cure the composition of the present invention.

## Patentansprüche

**1.** Hitzehärtbare Organopolysiloxanzusammensetzung umfassend

(A) 100 Gewichtsteile eines vinylgruppenhaltigen Organopolysiloxangummis mit der folgenden allgemeinen Formel

$$R^1_3SiO(\overset{R^2_2}{\overset{|}{Si}}O)_mSiR^1_3$$

worin $R^1$ die Hydroxylgruppe oder eine substituierte oder unsubstituierte monovalente Kohlenwasserstoffgruppe ist. $R^2$ eine substituierte oder unsubstituierte monovalente Kohlenwasserstoffgruppe ist, worin die Vinylgruppe 0.1 bis 2.0 Mol% der Gruppen $R^2$ bildet, und m eine Zahl mit einem Wert von mindestens 3000 ist.
(B) 10 bis 100 Gewichtsteile mikroteilchenförmiges Siliciumdioxid mit einer spezifischen Oberfläche von mindestens 250 $m^2/g$ und nicht mehr als 0.50 Gew.-% adsorbiertem Wasser.
(C) 1 bis 50 Gewichtsteile eines hydroxylgruppenhaltigen Organopolysiloxans mit der folgenden allgemeinen Formel

$$(CH_3)_2R^3SiO(\overset{R^4_2}{\overset{|}{Si}}O)_pSiR^3(CH_3)_2$$

worin $R^3$ die Hydroxylgruppe ist. $R^4$ eine monovalente Kohlenwasserstoffgruppe ist. wovon 0 bis 75 Mol% Vinylgruppen sind und p eine Zahl mit einem Wert von 1 bis 100 ist und
(D) ein Härtungsmittel in einer Menge, die ausreicht, um die erfindungsgemäße Zusammensetzung zu härten.

**Revendications**

1. Composition thermodurcissable à base d'organopolysiloxane comprenant

(A) 100 parties en poids d'une gomme d'organopolysiloxane contenant le groupe vinyle et répondant à la formule générale

$$R^1_3SiO(\overset{R^2_2}{\overset{|}{Si}}O)_mSiR^1_3$$

où $R^1$ est le groupe hydroxyle ou un groupe hydrocarboné monovalent substitué ou non substitué, $R^2$ est un groupe hydrocarboné monovalent substitué ou non substitué, le groupe vinyle représente 0,1 à 2 moles pour cent des groupes $R^2$ et m est un nombre valant au moins 3000,
(B) 10 à 100 parties en poids d'une silice microparticulaire ayant une surface spécifique d'au moins 250 $m^2$/g et ne renfermant pas plus de 0,50 pour cent en poids d'eau adsorbée,
(C) 1 à 50 parties en poids d'un organopolysiloxane porteur de groupes hydroxyle qui répond à la formule générale

$$(CH_3)_2R^3SiO(\overset{R^4_2}{\overset{|}{Si}}O)_pSiR^3(CH_3)_2$$

où $R^3$ est le groupe hydroxyle, $R^4$ est un groupe hydrocarboné monovalent, dont le groupe vinyle représente 0 à 75 moles pour cent, et p est un nombre valant 1 à 100,

et

(D) un agent durcisseur en une quantité suffisante pour durcir ladite composition.